# FASCICULE DE BREVET EUROPEEN

(11) **EP 2 766 121 B1**
(45) Date de publication et mention de la délivrance du brevet: **28.09.2016**
(21) Numéro de dépôt: 12772929.1
(22) Date de dépôt: 11.10.2012
(51) Int. Cl.: F16J 13/18, G21F 7/005, B01L 1/02

(54) **MECANISME DE COMMANDE A HAUT NIVEAU DE SECURITE POUR UN DISPOSITIF DE TRANSFERT ETANCHE ENTRE DEUX VOLUMES CLOS**
HOCHSICHERER STEUERMECHANISMUS FÜR EINE VORRICHTUNG ZUR DICHTEN ÜBERTRAGUNG ZWISCHEN ZWEI GESCHLOSSENEN RÄUMEN
HIGHLY SAFE CONTROL MECHANISM FOR A DEVICE FOR THE SEALED TRANSFER BETWEEN TWO CLOSED SPACES

(30) Priorité: 14.10.2011 FR 1159327
(43) Date de publication de la demande: 20.08.2014
(73) Titulaire: Getinge La Calhene, 41100 Vendôme (FR)
(72) Inventeur: CHAVROT, Bernard, F-37270 Athee Sur Cher (FR)
(74) Mandataire: Ahner, Philippe
(86) Numéro de dépôt international: PCT/EP2012/070194
(87) Numéro de publication internationale: WO 2013/053844

(56) Documents cités:
- EP-A1- 2 091 051
- FR-A1- 2 695 343
- US-A- 3 682 208

## Description

### DOMAINE TECHNIQUE ET ART ANTÉRIEUR

La présente invention se rapporte à un mécanisme de commande à haut niveau de sécurité pour un dispositif de transfert étanche entre deux volumes clos et à un dispositif de transfert étanche entre deux volumes clos.

Dans un certain nombre de secteurs industriels, parmi lesquels on citera les secteurs nucléaire, médical, pharmaceutique et agroalimentaire, il est nécessaire ou souhaitable d'effectuer certaines tâches dans une atmosphère confinée, soit afin de protéger le personnel, par exemple de la radioactivité, de la toxicité..., soit au contraire de pouvoir effectuer ces tâches dans une atmosphère aseptique ou exempte de poussière, soit enfin les deux simultanément.

Le transfert d'appareil ou de produit d'un volume clos à l'autre, sans qu'à aucun moment l'étanchéité de chacun de ces volumes vis-à-vis de l'extérieur ne soit rompue, pose un problème délicat à remplir. Ce problème peut être résolu par un dispositif de connexion à double porte.

Un tel dispositif à double porte muni d'une commande à multiple sécurités est par exemple connu du document FR 2 695 343. Chaque volume est clos par une porte montée dans une bride. Chaque porte est solidarisée à sa bride par une liaison baïonnette et les deux brides sont destinées à être solidarisés l'une à l'autre par une liaison baïonnette.

Dans le cas où l'un des volumes clos est formé par un conteneur et l'autre volume par une boîte à gants, le transfert s'effectue de la manière suivante. La bride du conteneur comporte sur sa périphérie extérieure des oreilles destinées à coopérer avec une empreinte de la bride de la boîte à gant. La bride du conteneur est introduite dans la bride de la boîte à gant, le conteneur est orienté de sorte à faire correspondre les oreilles avec l'empreinte. Une première rotation du conteneur suivant l'axe de sa porte permet de solidariser la bride du conteneur à la bride de la boîte à gant par la liaison baïonnette. Au moyen d'une deuxième rotation du conteneur, suivant le même axe et en continuité avec la première rotation, la porte du conteneur est pivotée par rapport au conteneur, assurant à la fois une solidarisation par une autre liaison baïonnette avec la porte de la boîte à gant et une désolidarisation du nouvel ensemble formé par les deux portes accolées vis-à-vis des brides de porte et de boîte à gant. Une commande à poignée située dans la boîte à gant permet de déverrouiller un mécanisme de sécurité et de libérer le passage entre les deux volumes. Dans le cas d'une atmosphère aseptique, les faces extérieures des deux portes étant en contact l'une avec l'autre de manière étanche, elles ne peuvent contaminer l'intérieur des volumes.

Le mécanisme de sécurité comporte un premier verrou bloquant la commande dans sa position de fermeture en l'absence de la porte du conteneur, un deuxième verrou bloquant la commande dans sa position de fermeture tant que la bride du conteneur n'est pas verrouillée sur la bride de la boîte à gant, un troisième verrou empêchant la désolidarisation des deux brides lors que la commande est dans une position en cours d'ouverture et enfin, un quatrième verrou s'opposant au retour de l'organe de commande vers sa position de fermeture après décollement de la première porte. La combinaison de ces verrous offre un très haut niveau de sécurité de l'ouverture de la boîte à gant. Cependant il est souhaitable de manière générale d'augmenter encore le niveau de sécurité du dispositif, en particulier pour éviter tout risque de rupture de l'étanchéité par une action malveillante.

### EXPOSÉ DE L'INVENTION

C'est par conséquent un but de la présente invention d'offrir un mécanisme offrant un niveau de sécurité encore plus élevée que le mécanisme de l'état de la technique.

Le but de la présente invention est atteint par un mécanisme de commande comportant les quatre verrous décrits ci-dessus et un verrou supplémentaire, destiné à être "activé" après déverrouillage du deuxième verrou et avant le verrouillage du troisième verrou si la bride du conteneur venait à quitter sa position de verrouillage sur la bride de l'enceinte. Ce verrou supplémentaire a pour fonction d'empêcher un actionnement supplémentaire du moyen de commande dans le sens du décollement de la porte de l'enceinte.

De manière très avantageuse, ce verrou supplémentaire comporte une première partie similaire à la partie du deuxième verrou montée dans l'organe de commande mobile, disposée en amont de celle-ci dans le sens de rotation de l'organe de commande mobile en vue de l'ouverture, et utilise la partie du deuxième verrou située dans la bride de l'enceinte. La robustesse de la structure de ce verrou supplémentaire a déjà été éprouvée, le nombre de pièces ajoutées est réduit et l'adaptation aux dispositifs existants est simplifiée.

La présente invention a alors pour objet un mécanisme de commande centralisé, à sécurités incorporées, pour un dispositif de transfert étanche entre deux volumes clos, ce dispositif comprenant une première et une deuxième brides aptes à être solidarisées l'une de l'autre par une première liaison à baïonnette, et une première et une deuxième portes obturant normalement des ouvertures délimitées respectivement par la première et la deuxième brides et aptes à être solidarisées l'une de l'autre par une deuxième liaison à baïonnette, ce mécanisme de commande comprenant :
- un organe de commande mobile, monté sur la première bride de façon à pouvoir se déplacer entre une position de fermeture et une position d'ouverture, en passant par une position intermédiaire de verrouillage,
- un système de rampes interposé entre l'organe de commande et la première porte, de façon à décoller cette dernière de la première bride lors d'un déplacement de l'organe de commande de sa position de verrouillage vers sa position d'ouverture,

- un premier verrou bloquant normalement l'organe de commande dans sa position de fermeture, et automatiquement déverrouillé par la présence de la deuxième porte contre la première porte,
- un deuxième verrou bloquant normalement l'organe de commande dans sa position de fermeture, et automatiquement déverrouillé par la solidarisation de la deuxième bride sur la première bride par la première liaison à baïonnette,
- un troisième verrou normalement déverrouillé lorsque l'organe de commande est dans sa position de fermeture, et bloquant automatiquement- la première liaison à baïonnette dans un état de solidarisation des première et deuxième brides lorsque l'organe de commande se trouve entre ses positions de verrouillage et d'ouverture ou dans l'une de ces positions,
- un quatrième verrou, normalement déverrouillé lorsque l'organe de commande est dans sa position de fermeture, et s'opposant automatiquement au retour de cet organe vers sa position de fermeture, après un décollement de la première porte commandé par le système de rampes, lorsque l'organe de commande se trouve entre ses positions de verrouillage et d'ouverture ou dans l'une de ces positions,
le mécanisme de commande centralisé comportant également un verrou de protection normalement déverrouillé en position de fermeture et en position d'ouverture de l'organe de commande et apte à bloquer l'organe de commande lorsque la deuxième bride n'est pas au moins complètement verrouillée sur la première bride entre le moment où le deuxième verrou est en position déverrouillée et avant le moment où le troisième verrou bloque la première liaison baïonnette dans un état de solidarisation des première et deuxième brides, de sorte à empêcher l'ouverture de la première porte.

Dans un exemple de réalisation, le deuxième verrou comprend une première tige de blocage montée coulissante dans un alésage de l'organe de commande; un premier moyen élastique tendant à déplacer cette tige de blocage vers la première bride, de façon à l'introduire partiellement dans un alésage traversant formé dans cette bride, lorsque l'organe de commande occupe sa position de fermeture ; et une deuxième tige de commande montée coulissante dans cet alésage traversant, de façon à faire saillie sur une face de la première bride tournée vers la deuxième bride, en un emplacement tel que cette tige de commande n'est repoussée, pour autoriser une rotation de l'organe de commande, que lorsque la première liaison à baïonnettes est verrouillée.

De manière particulièrement avantageuse, le verrou de protection comprend une troisième tige de blocage montée coulissante dans un alésage de l'organe de commande, un troisième moyen élastique tendant à déplacer la troisième tige de blocage vers la première bride, la troisième tige de blocage et le troisième alésage étant situés en amont de la première tige de blocage dans le sens d'ouverture de l'organe commande, de sorte que la troisième tige de blocage s'introduise partiellement dans l'alésage traversant du deuxième verrou, lorsque l'organe de commande occupe une position intermédiaire; et que la deuxième bride n'est pas complètement verrouillée en rotation sur la première bride.

La troisième tige de blocage comporte de préférence une extrémité longitudinale orientée vers la première bride, ladite extrémité longitudinale étant munie d'une face inclinée de telle sorte que ladite face provoque l'escamotage de la troisième tige de blocage dans l'organe de commande lors du déplacement de l'organe de commande vers sa position de fermeture.

Le premier verrou comprend par exemple un premier organe de blocage mobile supporté par la première porte du côté opposé à la deuxième porte, cet organe de blocage étant destiné à coopérer avec l'organe de commande, et une tige de commande apte à coopérer avec l'organe de blocage lorsque l'organe de blocage occupe sa position de fermeture et lorsque la deuxième porte ne repousse pas la tige de commande, pour assurer le blocage de l'organe de commande.

Le troisième verrou comprend par exemple une deuxième tige de blocage montée coulissante dans un deuxième alésage de la première bride, au moins une surface de came contre laquelle est appliquée une extrémité de cette deuxième tige de blocage formée sur l'organe de commande, de telle sorte que l'extrémité opposée de la deuxième tige de blocage soit effacée dans le deuxième alésage lorsque l'organe de commande est en position de fermeture, et fasse saillie sur une face de la première bride tournée vers la deuxième bride, en un emplacement tel qu'elle bloque la première liaison à baïonnette dans un état verrouillé, lorsque l'organe de commande se trouve entre les positions de verrouillage et d'ouverture, ou dans une de ces positions.

Le quatrième verrou comprend un doigt de blocage monté coulissant dans un alésage de la première bride, des moyens élastiques tendant à appliquer le doigt de blocage contre une face en regard de l'organe de commande, une rainure de piégeage formée dans cette face en regard, de façon à se trouver en face du doigt de blocage lorsque l'organe de commande se trouve entre les positions de verrouillage et d'ouverture ou dans l'une de ces positions, et une surface d'appui liée à la première porte, maintenant le doigt de blocage en totalité dans l'alésage de la première bride tant que la première porte n'est pas décollée de la première bride.

Le système de rampes peut comprendre deux rampes parallèles, en vis-à-vis, liées à la première porte, et un galet porté par l'organe de commande et coopérant simultanément avec ces deux rampes parallèles.

La surface d'appui ainsi que les rampes parallèles peuvent être formées sur une pièce apte à être fixée sur une face de la première porte opposée à la deuxième porte, cette pièce supportant également le premier verrou.

L'organe de commande est par exemple un organe pivotant, monté sur une face de la première bride opposée à la deuxième bride par un axe de pivotement. La première tige de blocage et la troisième tige de blocage sont alors situées à la même distance de l'axe de rotation de l'organe de commande.

### BRÈVE DESCRIPTION DES DESSINS

La présente invention sera mieux comprise à l'aide de la description qui va suivre et des dessins en annexes, sur lesquels :
- la figure 1 est une vue en coupe longitudinale illustrant schématiquement le raccordement d'un conteneur sur une cellule au moyen d'un dispositif de transfert étanche à double porte équipé d'un mécanisme de commande centralisé conforme à l'invention,
- la figure 2 est une vue de face, depuis l'intérieur de la cellule, du mécanisme de commande centralisé, la porte de la cellule étant omise,
- la figure 3A est une vue en perspective de trois quart, depuis l'intérieur de la cellule, du mécanisme de commande centralisé, la porte de la cellule n'étant pas représentée,
- la figure 3B est une vue en perspective de trois quart, depuis l'extérieur de la cellule, du mécanisme de commande centralisé, la porte de la cellule n'étant pas représentée,
- la figure 4 est une vue en coupe schématique du mécanisme cde la figure 2 suivant la ligne A-A,
- la figure 5 est une vue en coupe schématique suivant la ligne B-B,
- la figure 6 est une vue en coupe schématique suivant la ligne C-C,
- la figure 7A est une vue en coupe schématique suivant la ligne D-D,
- la figure 7B est une vue en perspective de l'organe commande seule,
- la figure 7C est une vue en coupe schématique de détail du verrou de protection dans un état verrouillé,
- la figure 8 est une vue en coupe schématique suivant 1 aligne E-E,
- la figure 9A est une vue de dessous de la porte de cellule,
- la figure 9B est une vue en coupe schématique de la porte de la cellule suivant la ligne A-A.

### EXPOSÉ DÉTAILLÉ DE MODES DE RÉALISATION PARTICULIERS

Dans le mode de réalisation illustré sur les figures, les deux volumes clos que l'on désire relier à l'aide d'un dispositif de transfert étanche à double porte muni du mécanisme de commande centralisé à sécurités incorporées conforme à l'invention correspondent respectivement à une cellule de confinement 10 et à un conteneur 12. On comprendra cependant que l'invention est aussi applicable dans le cas où les volumes clos seraient par exemple pour l'un une boîte à gant et pour l'autre un conteneur ou deux boîtes à gants.

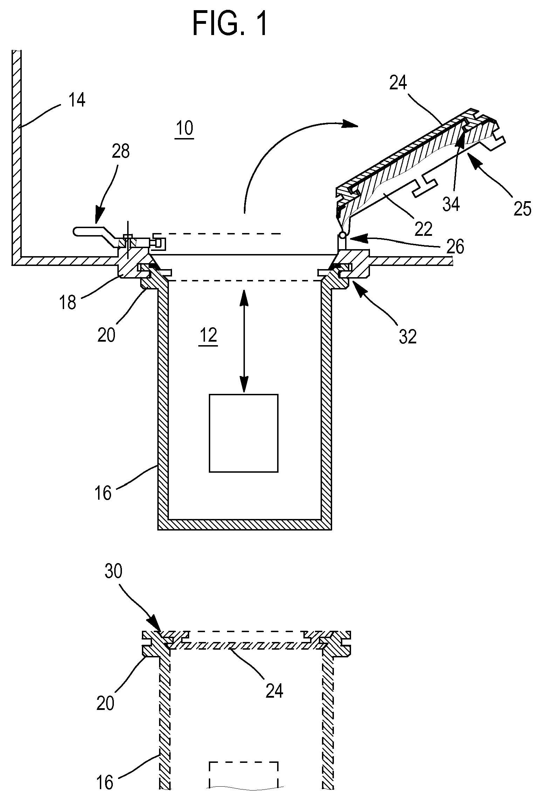

La cellule 10 est délimitée par une paroi 14 dont une partie seulement est visible sur les figures. Elle est équipée, de façon classique, de moyens de manipulation à distance tels que des télémanipulateurs et/ou des gants (non représentés) solidaires de la paroi 14, grâce auxquels le mécanisme de commande centralisé peut être manoeuvré depuis l'intérieur de cette cellule 10. Le conteneur 12 est également délimité par une paroi 16, comme l'illustre notamment la figure 1.

Le dispositif de transfert étanche à double porte dans lequel est utilisé le mécanisme de commande centralisé comprend principalement une bride de cellule 18, une bride de conteneur 20, une porte de cellule 22 obturant normalement une ouverture circulaire délimitée par la bride de cellule 18, et une porte de conteneur 24 obturant normalement une ouverture délimitée par la bride de conteneur 20. La bride de cellule 18 et la bride de conteneur 20 sont fixées respectivement sur la paroi 14 de la cellule 10 et sur la paroi 16 du conteneur 12. La porte de cellule 22 est articulée sur la bride de cellule 18 par une charnière 26.

En un emplacement diamétralement opposé par rapport à cette charnière 26, un mécanisme de commande centralisé, désigné de façon générale par la référence 28, permet conformément à l'invention de commander l'ouverture et la fermeture des portes 22 et 24, ainsi que des sécurités incorporées à ce mécanisme 28, lorsque le conteneur 12 a été monté sur la cellule 10. La fixation de la porte de conteneur 24 sur la bride de conteneur 20 est assurée par une liaison à baïonnette 30.

Pour permettre la solidarisation de la bride de conteneur 20 sur la bride de cellule 18 et la solidarisation de la porte de conteneur 24 sur la porte de cellule 22, le dispositif de transfert étanche à double porte comprend également deux autres liaisons à baïonnette désignées respectivement par les références 32 et 34. Les trois liaisons à baïonnette 30, 32 et 34 sont agencées de telle sorte qu'après accostage de la bride de conteneur 20 sur la bride de cellule 18, une rotation du conteneur 12 autour de son axe, par exemple dans le sens des aiguilles d'une montre, a pour effet de solidariser la bride de conteneur 20 de la bride de cellule 18, de solidariser la porte de conteneur 24 de la porte de cellule 22, et de désolidariser la porte de conteneur 24 de la bride de conteneur 20. Ces deux dernières opérations s'effectuent de façon consécutive, de telle sorte que l'ouverture du conteneur n'intervient qu'après que la porte de conteneur 24 ait été solidarisée de la porte de cellule 22 pour former une double porte.

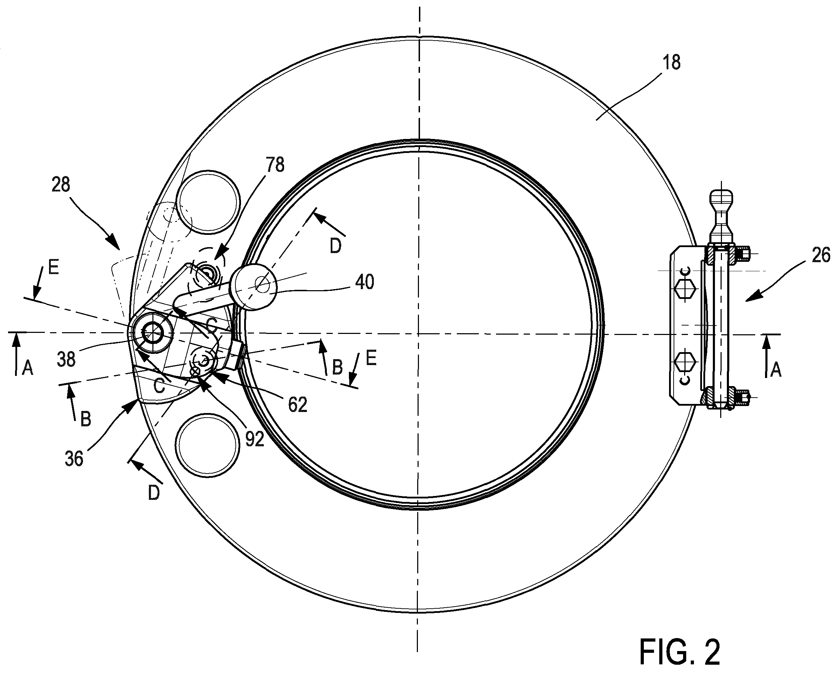

Le mécanisme de commande centralisé 28, à sécurités intégrées, va à présent être décrit en détail en se référant aux figures 2 à 9. Ce mécanisme de commande 28 comprend tout d'abord un organe de commande mobile 36, articulé sur la bride de cellule 18 par un axe 38 dans le mode de réalisation représenté. Plus précisément, l'axe 38 est orienté parallèlement à l'axe de l'ouverture circulaire délimitée par la bride 18 et l'organe de commande mobile 36 est en contact avec la face de cette bride 18 tournée vers l'intérieur de la cellule 10. L'organe de commande mobile 36 est équipé d'un levier ou d'une poignée 40 permettant d'en commander manuellement la rotation.

Dans une variante de réalisation non représentée, la rotation de l'organe de commande 36 est assurée d'une manière automatisée par une motorisation qui peut être placée à l'intérieur ou à l'extérieur de la cellule 10. Dans ce cas, la commande de cette motorisation peut être directement accessible depuis l'extérieur de la cellule, sans avoir recours à des moyens de manipulation à distance.

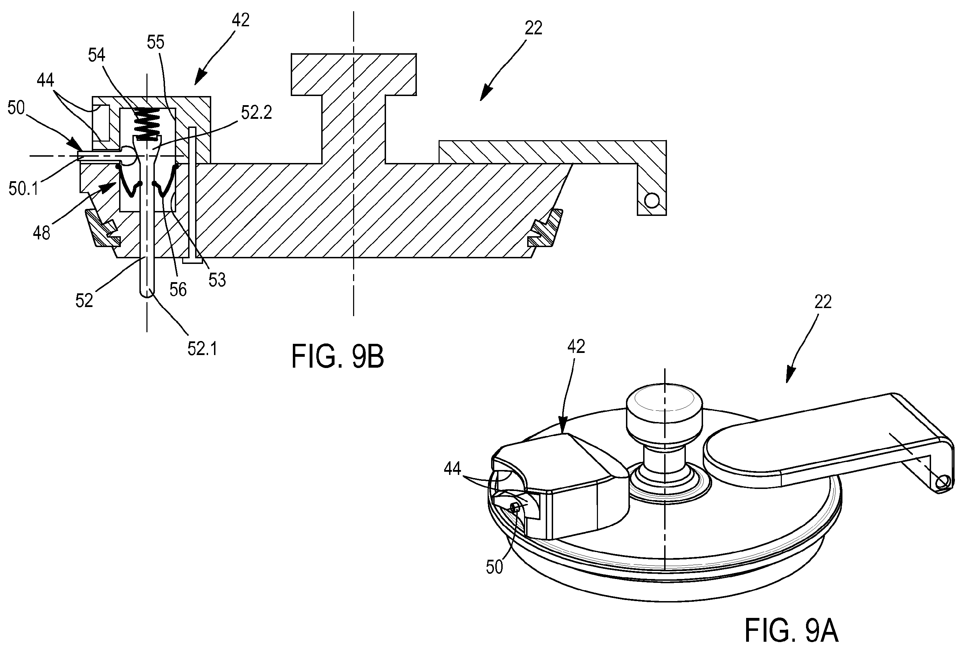

Le mécanisme de commande centralisé comprend de plus, en face de l'organe de commande 36, une pièce 42 qui est fixée sur la face de la porte de cellule 22 tournée vers l'intérieur de la cellule 10. Comme le montrent plus précisément les figures 9A et 9B, cette pièce 42 comporte, sur son bord extérieur tourné vers l'organe de commande 36, une rainure dont les bords opposés forment deux rampes parallèles 44 en vis-à-vis. Ces deux rampes 44 assurent le guidage d'un galet rotatif 46 dont l'axe est fixé sur le bord de l'organe de commande 36 tourné vers la pièce 42, et orienté radialement par rapport à l'axe de rotation 38 de cet organe 36. L'agencement qui vient d'être décrit permet de commander le décollement ou l'arrachement de la double porte 25 par une rotation de l'organe de commande 36 dans le sens inverse des aiguilles d'une montre en considérant la figure 2, et la fermeture de la double porte par une rotation inverse de l'organe de commande 36.

Le mécanisme de commande centralisé conforme comprend de plus un certain nombre de sécurités incorporées, matérialisées par des verrous qui vont à présent être décrits.

Un premier verrou 48 (figures 9A et 9B) a pour fonction de bloquer l'organe de commande 36 dans une position extrême de fermeture, dans laquelle la porte de cellule 22 obture de façon étanche la bride de cellule 18. Ce premier verrou 48 comprend un organe de blocage mobile 50 qui est monté sur la pièce 42 de façon à pouvoir se déplacer perpendiculairement à l'axe de la porte de cellule 22 supportant cette pièce 42, entre une position normale de blocage de l'organe de commande 36 et une position de déverrouillage de cet organe. L'organe de blocage 50 est formé par une tige dont une extrémité 50.1 est destinée à pénétrer dans une lumière 51 réalisée dans l'organe de commande 36 (figure (3A) en position de verrouillage. Un ressort (non représenté) tend à faire rentrer la tige 50 à l'intérieur de la pièce 42. Une tige de commande 52, est montée coulissante dans un alésage traversant 53 de la porte de cellule 22 et dans un alésage borgne 55 de la pièce 42 parallèlement à l'axe de la porte de cellule 22. La tige de commande 52 comporte une première extrémité longitudinale 52.1 orientée vers l'extérieur de la cellule 10 et destinée à faire saillie de la face de la porte de cellule 22 orientée vers l'extérieur. Un ressort 54 est monté en compression entre une deuxième extrémité longitudinale 52.2 opposée à la première extrémité longitudinale 52.1 de la tige de commande 52 et un fond de l'alésage borgne 55 de la pièce 42, de sorte à repousser la première extrémité 52.1 de la tige de commande 52 vers l'extérieur de la porte de cellule 22. La deuxième extrémité longitudinale 52.2 de la tige de commande 52 comporte une rampe destinée à coopérer avec une deuxième extrémité 50.2 de l'organe de blocage 50 de sorte que lorsque la tige de commande 52 fait saillie de la porte 22 vers l'extérieur de la cellule, l'organe de commande soit maintenue repoussé vers l'extérieur de la porte et l'extrémité 50.1 fasse saillie radialement vers l'extérieur de la porte 22, afin d'empêcher le déplacement de l'organe de commande dans un sens d'ouverture.

Lorsqu'un conteneur 12 équipé de sa porte de conteneur 24 est accosté sur la bride de cellule 18, la porte de conteneur 24 vient en appui sur la première extrémité longitudinale 52.1 de la tige de commande 52, qui est repoussée à l'encontre du ressort 54, ce qui a pour effet d'écarter la rampe de l'organe de blocage 50, et donc de libérer celui-ci, qui coulisse vers l'intérieur de la pièce de 42 en éloignement de l'organe de commande 36 sous l'effet du ressort. Le premier verrou 48 se trouve alors dans son état déverrouillé car l'extrémité 50.1 de l'organe de commande est dégagée de la fenêtre 51, l'organe de commande 36 est alors déverrouillé. Comme l'illustre aussi la figure 9B, l'étanchéité de la porte de cellule 22 est avantageusement préservée en plaçant entre celle-ci et la tige de commande 52 qui la traverse un organe d'étanchéité 56.

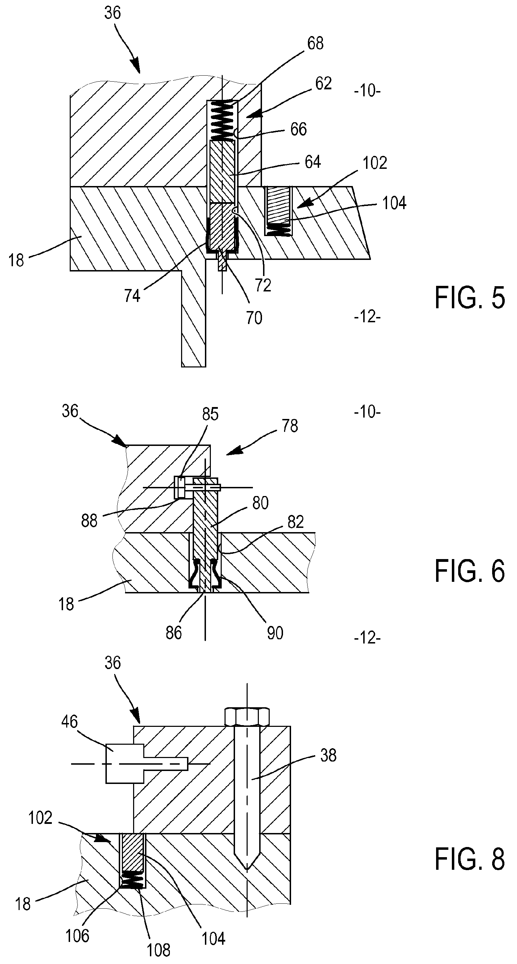

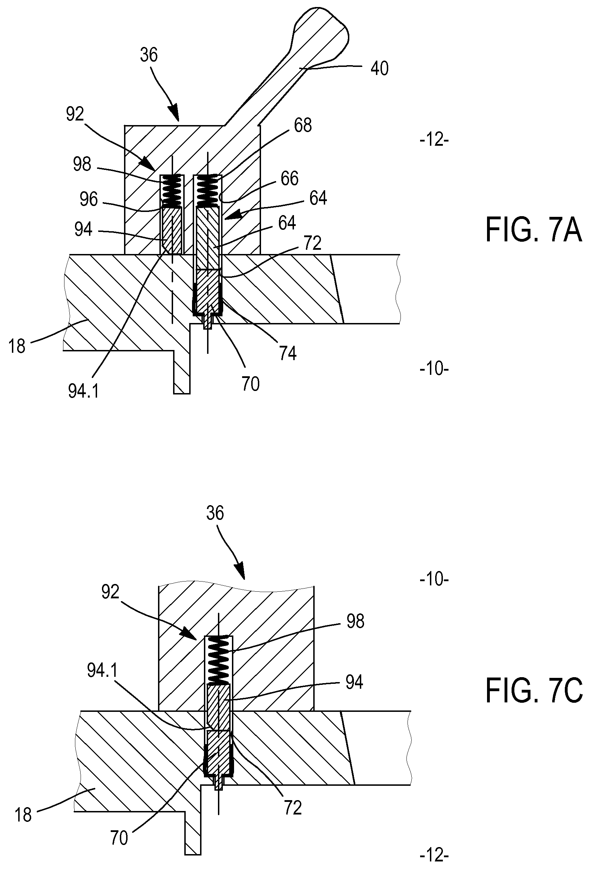

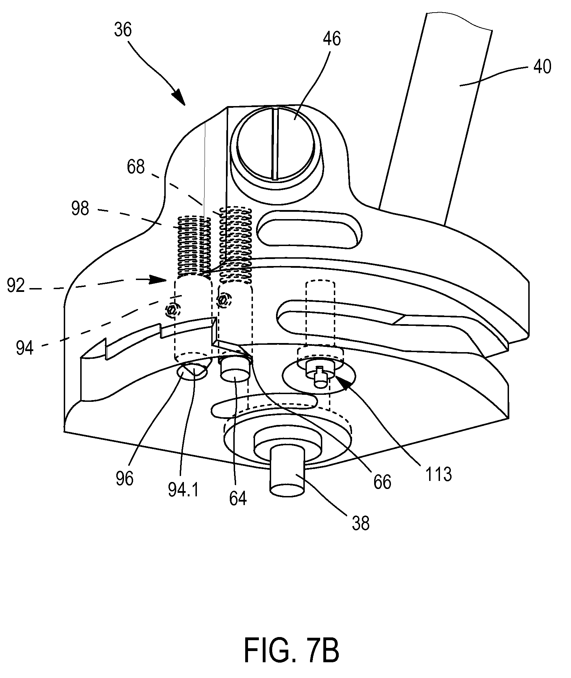

Les sécurités incorporées dans le mécanisme de commande centralisé 28 comprennent également un deuxième verrou 62 (figures 5, 7A et 7B) qui a pour fonction de maintenir l'organe de commande mobile 36 bloqué dans son état de fermeture tant que la bride de conteneur 20 n'est pas complètement solidarisée à la bride de cellule 18 par la liaison à baïonnettes 32.

Ce deuxième verrou 62 comprend tout d'abord une tige de blocage 64, qui est montée coulissante dans un alésage borgne 66 formé dans l'organe de commande 36 parallèlement à son axe de pivotement 38. L'extrémité ouverte de cet alésage borgne 66 est tournée vers la bride de cellule 18 et un ressort hélicoïdal de compression 68 est placé entre la tige de blocage 64 et le fond de l'alésage 66. Ce ressort 68 maintient en permanence la tige de blocage 64 en appui contre la face de la bride de cellule 18 tournée vers l'intérieur de la cellule 10.

Le deuxième verrou 62 comprend également une tige de commande 70 reçue de façon coulissante dans un alésage traversant 72 usiné dans la bride de cellule 18, parallèlement à l'axe de l'ouverture délimitée par cette bride. Cet alésage traversant 72 présente un diamètre identique à celui de l'alésage borgne 66 et il est aligné avec ce dernier lorsque l'organe de commande 36 occupe la position de fermeture définie précédemment. Dans ces conditions et comme l'illustre les figures 5 et 7A, le ressort 68 repousse simultanément les tiges 64 et 70, de telle sorte que la tige 64 soit partiellement située dans chacun de ces deux alésages. Cette position de blocage est déterminée par une butée de fin de course (non représentée) de la tige 70. La position alors occupée par la tige de blocage 64 a pour effet de s'opposer à toute rotation de l'organe de commande 36 autour de son axe 38. Un organe d'étanchéité 74 (figures 5 et 7A) est interposé entre la tige 70 et la bride de cellule 18, pour préserver l'étanchéité de cette dernière. Dans la position de blocage de l'organe de commande 36 par le deuxième verrou 62, l'extrémité de la tige de commande 70 tournée vers l'extérieur de la cellule 10 fait saillie au-delà d'une face de la bride de cellule 18 débouchant dans une rainure de cette bride apte à recevoir une oreille de la bride de conteneur 20, cette rainure et cette oreille appartenant à la liaison à baïonnette 32. Plus précisément, la tige 70 fait alors saillie dans la rainure précitée en un emplacement tel que l'ensemble formé par les deux tiges 70 et 64 n'est repoussé à l'encontre du ressort 68 que lorsque la liaison à baïonnette 32 est totalement verrouillée.

Lorsque la solidarisation des deux brides de la liaison à baïonnette 32 est complète, les deux tiges 70 et 64 sont repoussées à l'encontre du ressort 68 de telle sorte que le plan de joint entre ces deux tiges se trouve confondu avec le plan de joint entre la bride de cellule 18 et l'organe de commande mobile 36. Par conséquent, la rotation de l'organe 36 autour de son axe 38 est alors autorisée. Les verrous 48 et 62 constituent des sécurités complémentaires qui permettent d'éviter une ouverture intempestive de la porte de cellule 22 respectivement si un conteneur dépourvu de porte est accosté sur la bride de cellule 18 et si la solidarisation de la bride 20 de conteneur 20 sur la bride de cellule 18 à l'aide de la liaison à baïonnette 32 n'est pas complète.

Les sécurités incorporées dans le mécanisme de commande centralisé 28 comprennent également un troisième verrou 78 (figures 2, 6, 7A, 7B) destiné à éviter, que la liaison à baïonnette 32 entre les brides 18 et 20 ne puisse être déconnectée lorsque l'organe de commande 36 est manoeuvré dans le sens de l'ouverture de la double porte. En complément à ce troisième verrou 78, l'organe de commande mobile présente une course morte, entre sa position normale de fermeture et une position intermédiaire de verrouillage de la liaison à baïonnette 32, au cours de laquelle la rotation de l'organe de commande 36 autour de son axe 38 est sans effet sur la double porte (la partie correspondante des rampes parallèles 44 est perpendiculaire à l'axe de la porte de cellule 22). Au cours de cette course morte, la rotation de l'organe de commande 36 a seulement pour effet d'actionner le troisième verrou 78, afin de verrouiller la liaison à baïonnettes 32.

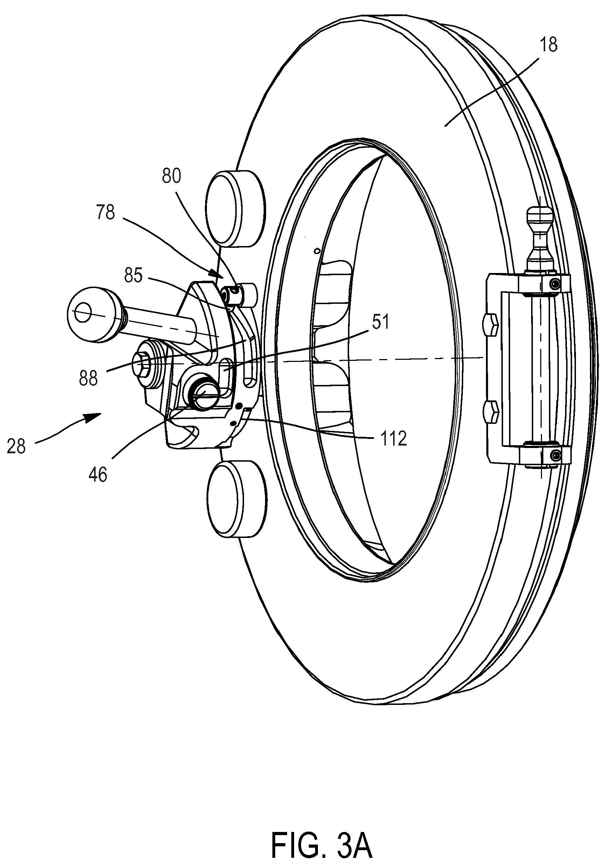

Comme l'illustrent les figures 6 et 3A, le troisième verrou 78 comporte une tige de blocage 80 qui est montée coulissante dans un alésage traversant 82 formé dans la bride de cellule 18 parallèlement à l'axe de pivotement 38. La tige de blocage 80 comporte un galet 85 coopérant avec un chemin de came 88 formé dans l'organe de commande mobile 36. Le chemin de came comporte deux surfaces de came parallèles délimitant une rainure guidant le galet. L'étanchéité de la bride de cellule 18 est préservée au moyen d'un organe d'étanchéité 90 interposé entre cette bride et la tige de blocage 80.

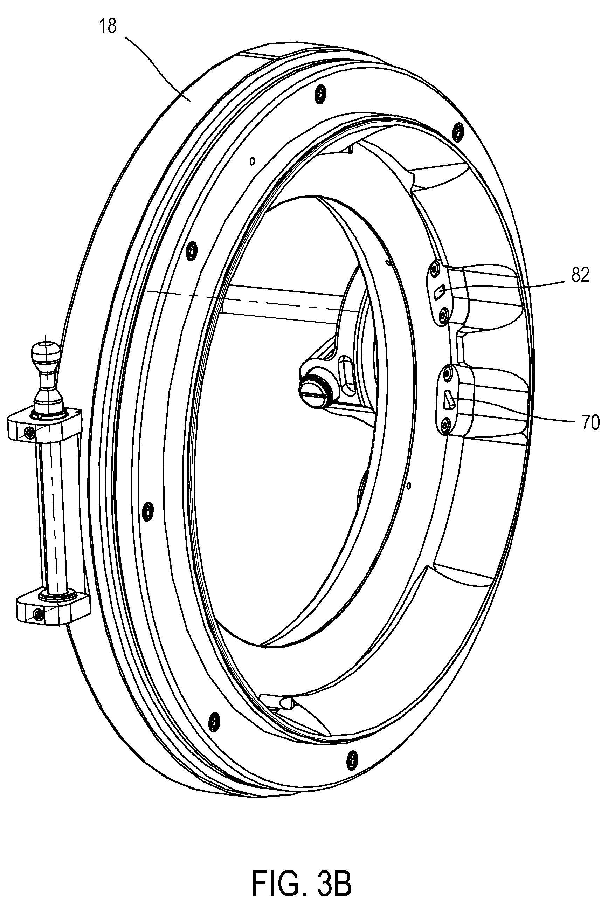

Le profil du chemin de came 88 est tel que, lorsque l'organe de commande mobile 36 occupe sa position de fermeture (figures 6 et 3B), l'extrémité de la tige de blocage 80 opposée à la tête 86 affleure la face de la bride de cellule 18 tournée vers l' extérieur de la cellule 10, dans la rainure destinée à recevoir les oreilles de la bride de conteneur 20 lors de la solidarisation de ces deux brides à l'aide de la liaison à baïonnette 32. En variante, on pourrait prévoir uniquement une surface de came et un ressort de compression qui appliquerait en permanence le galet contre la surface de came. Cette variante permet de réduire l'encombrement.

Lors d'une rotation de l'organe de commande mobile 36 depuis cette position de fermeture jusqu'à la position intermédiaire de verrouillage de la liaison à baïonnette 32, le chemin de came 88 déplace la tige de blocage 80 vers l'extérieur de la cellule 10. Par conséquent, la tige de blocage 80 fait saillie dans la rainure de la bride de cellule 18 destinée à recevoir les oreilles de la bride de conteneur 20, lorsque l'organe de commande mobile 36 se trouve dans sa position de verrouillage. L'emplacement de l'alésage 82 dans lequel est reçue la tige de blocage 80 est déterminé afin que cette tige s'oppose alors à la rotation des oreilles formées sur la bride de conteneur 20 dans le sens de la déconnexion de la liaison à baïonnette 32.

Les sécurités incorporées au mécanisme de commande centralisé 28 comprennent un verrou additionnel 92, désigné dans la suite par "verrou de protection" permettant d'empêcher toute possibilité de déplacement de l'organe de commande 36 dans un sens d'ouverture en cas de retrait du conteneur, ou si la bride de conteneur quittait sa position de verrouillage.

Le verrou de protection 92 est similaire dans son fonctionnement de celui du deuxième verrou et est illustré sur les figures 7A et 7B

Le verrou de protection 92 comporte une tige de blocage 94, qui est montée coulissante dans un alésage borgne 96 formé dans l'organe de commande 36 parallèlement à son axe de pivotement 38. L'alésage borgne 96 est situé en amont de l'alésage borgne 66 du deuxième verrou dans le sens de rotation d'ouverture de l'organe de commande et sur un arc de cercle centré sur l'axe de rotation de l'organe de commande et sur lequel se situe également l'alésage borgne 66 du deuxième verrou. L'extrémité ouverte de l'alésage borgne 96 est tournée vers la bride de cellule 18 et un ressort hélicoïdal de compression 98 est placé entre la tige de blocage 94 et le fond de l'alésage borgne 96. Ce ressort 98 maintient en permanence la tige de blocage 94 en appui contre la face de la bride de cellule 18 tournée vers l'intérieur de la cellule 10.

La tige de blocage 94 est destinée à coopérer avec la tige de commande 70 du deuxième verrou reçue de façon coulissante dans l'alésage traversant 72 dans la bride de cellule 18.

L'extrémité de la tige de blocage 94 glissant sur la bride de cellule présente avantageusement une face biseautée 94.1 orientée de sorte à assurer l'escamotage vers le haut de la tige de blocage 94 lorsque l'organe de commande 36 est pivoté dans le sens de fermeture. Ainsi l'organe de commande 36 peut être remis en position de fermeture en attendant la remise en place du conteneur et de la bride de conteneur 20, sans être gêné par le verrou de protection 92.

Comme expliqué précédemment, lorsque la solidarisation des deux brides 18, 20 par la liaison à baïonnette 32 est complète, les deux tiges 70 et 64 sont repoussées à l'encontre du ressort 68 de telle sorte que le plan de joint entre les deux tiges 70 et 64 se trouve confondu avec le plan de joint entre la bride de cellule 18 et l'organe de commande mobile 36. La rotation de l'organe 36 autour de son axe 38 est alors autorisée. En faisant pivoter l'organe de commande mobile 36 depuis la position de fermeture dans le sens d'ouverture, la surface de came 88 déplace la tige de blocage 80 vers l'extérieur de la cellule 10, ce qui empêche de retirer la bride de conteneur 20. Simultanément, la tige de blocage 94 est déplacée et glisse sur la bride de cellule 18 et sur l'extrémité de la tige 70 qui affleure la face de la bride de cellule 18. En revanche, si entre la position où l'organe de commande mobile 36 est libéré en rotation et la position où la tige de blocage 80 empêche effectivement le retrait de la bride de conteneur 20, une personne arrive à retirer le conteneur et donc à désolidariser la bride de conteneur 20 de la bride de cellule 18 ou si la bride de conteneur quittait sa position de verrouillage, la tige 70 retombe dans le fond de l'alésage 72. Lorsque la tige de blocage 94 du verrou de protection 92 arrive face à l'extrémité ouverte de l'alésage 72 du fait du déplacement de l'organe de commande 36, celle-ci sous l'effet du ressort 98 pénètre partiellement dans l'alésage 72, et bloque ainsi tout mouvement de rotation supplémentaire de l'organe de commande 36 en vue d'une ouverture. Ainsi tout risque d'une ouverture de la cellule alors que le conteneur n'est pas en place est évité.

Le verrou de protection 92 présente l'avantage d'être de conception simple. Sa robustesse et son efficacité ont été éprouvées, puisque sa structure est similaire au deuxième verrou. En outre il utilise une partie du deuxième verrou 62 ce qui limite le nombre pièces supplémentaires ajouté et l'encombrement, et ceci sans réduire aucunement l'efficacité et la fiabilité du deuxième verrou 62. En outre, celui-ci est très facilement intégrable dans les commandes de type connu, et ne demande pas de développement d'une structure complète.

Ce verrou de protection est destiné à être très peu activé puisque les cas où le conteneur serait retiré alors que l'organe de commande mobile a commencé à être pivoté relèvent, soit d'un acte de malveillance, soit d'un manque d'information sur le fonctionnement du dispositif de transfert étanche et n'ont que très peu de risque d'arriver, notamment du fait des domaines techniques auxquels s'applique l'invention. En outre, la probabilité qu'un opérateur arrive à retirer le conteneur est très faible car une telle manipulation est très complexe.

Dans une variante de réalisation, le verrou de protection 92 pourrait comporter propre alésage réalisé dans la bride de cellule et son propre tige apte à coulisser dans cet alésage, au lieu d'utiliser l'alésage 72 du deuxième verrou 62.

Les sécurités incorporées au mécanisme de commande centralisé 28 comprennent enfin un quatrième verrou 102 (figures 5 et 8) permettant d'éviter toute possibilité de retour de l'organe de commande 36 de sa position de verrouillage de la liaison à baïonnettes 32 vers sa position de fermeture de la double porte dès que le décollement ou l'arrachement de cette dernière a commencé. En effet, si le retour de l'organe de commande mobile 36 dans la position de fermeture était possible à ce stade, un opérateur pourrait éventuellement déconnecter la bride de conteneur 20 de la bride de cellule 18 alors que la double porte a été enlevée.

Ce quatrième verrou 102 comprend tout d'abord un doigt de blocage 104 (figures 5, 8 et 9) monté coulissant dans un alésage borgne 106 formé dans la bride de cellule 18 parallèlement à l'axe de l'ouverture délimitée par cette bride et qui débouche vers l'intérieur de la cellule 10. Un ressort de compression 108 interposé entre le doigt de blocage 104 et le fond de l'alésage borgne 106 tend à déplacer le doigt de blocage 104 vers l'intérieur de la cellule 10. L'emplacement de l'alésage borgne 106 est tel qu'il est normalement en partie obturé par une excroissance de la pièce 42 lorsque la porte de cellule 22 est en place. Dans ces conditions, le doigt de blocage 104 est totalement escamoté dans l'alésage 106 par son appui contre une surface d'appui 110 de l'excroissance de la pièce 42. Par ailleurs, une rainure de passage 112 (figure 3A), formant un arc de cercle centré sur l'axe de pivotement 38, est usinée sur la face de l'organe de commande mobile 36 tournée vers la bride de cellule 18, de façon à se trouver en face de l'alésage 106 lorsque l'organe de commande occupe sa position de verrouillage, sa position extrême d'ouverture, ou une position intermédiaire entre la ces deux positions. Les bords de cette rainure de piégeage 112 sont droits, de telle sorte que la venue en appui de l'extrémité du doigt de blocage 104 contre ces bords s'oppose à toute rotation de l'organe de commande mobile 36 dans la direction correspondante.

Dès que le décollement ou l'arrachement de la double porte 25 intervient, du fait de la coopération du galet 46 avec les rampes parallèles 44, lorsque l'organe de commande mobile 36 tourne autour de son axe 38 dans le sens inverse des aiguilles d'une montre de sa position de verrouillage vers sa position d'ouverture, la surface d'appui 100 s'éloigne de la bride de cellule 18, de telle sorte que le doigt de blocage 104 est repoussé dans la rainure de piégeage 112 par le ressort 108. La poursuite de la rotation de l'organe de commande mobile 36 dans le sens inverse des aiguilles d'une montre a pour effet de poursuivre l'arrachement de la double porte et de faire parcourir au doigt de blocage 104 la rainure de piégeage 112. La position d'ouverture est déterminée par la venue en butée du doigt de blocage 104 contre l'extrémité correspondante de la rainure de piégeage 112. Dans cette position, les formes complémentaires données à la pièce 42 et à l'organe de commande mobile 36 permettent de faire pivoter la double porte autour de la charnière 26. Si un opérateur manoeuvre alors l'organe de commande mobile 36 dans le sens des aiguilles d'une montre, le doigt de blocage 94 vient en butée contre l'extrémité opposée de la rainure de piégeage 112 dès que l'organe de commande mobile atteint la position de verrouillage de la liaison à baïonnettes 32. Par conséquent, il n'est pas possible d'amener l'organe de commande mobile 36 dans la position de fermeture qui autorise la déconnexion des brides 18 et 20. Pour assurer la fermeture de la double porte la avant de déconnecter le conteneur 12 de la cellule la, on effectue des opérations inverses de celles qui viennent d'être décrites.

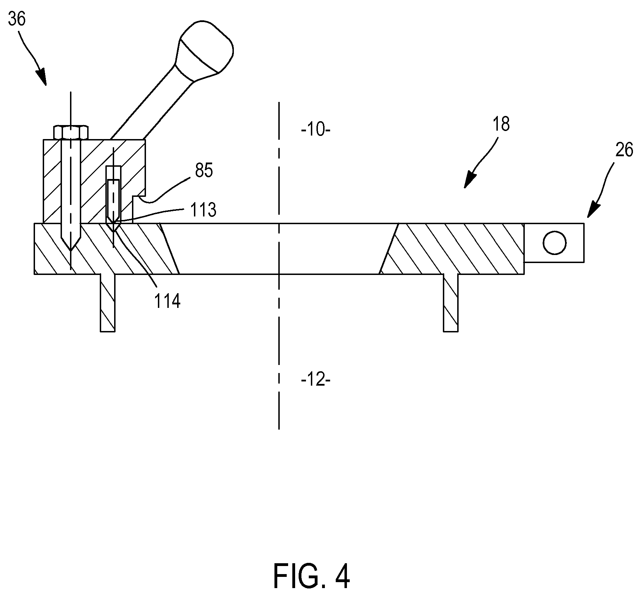

Sur les figures 4 et 7B, on peut voir un poussoir 113 monté dans l'organe de commande et glissant sur la bride 18 et destiné à coopérer avec deux évidements 114 pratiqués dans la face de la bride 18 tournée vers la cellule, Les emplacements des évidements sont tels qu'ils correspondent pour l'un à la position de fermeture et pour l'autre à la position d'ouverture, la coopération du poussoir et de l'un ou l'autre des évidements forme un point dur pour l'opérateur qui est alors informé qu'il a atteint l'une ou l'autre des positions de fermeture ou d'ouverture, et maintient l'organe de commande 36 en position.

Bien entendu, les différentes sécurités incorporées au mécanisme de commande centralisé conforme à l'invention peuvent prendre des formes différentes de celles qui ont été décrites, sans sortir du cadre de l'invention. En outre, l'organe de commande peut être mobile en translation, et non en rotation. Dans ce cas, la tige de blocage 94 serait située dans le même plan que celui contenant la tige de blocage 64 et la tige 70 quelle que soit la position de l'organe de commande.

## Revendications

1. Mécanisme de commande centralisé, à sécurités incorporées, pour un dispositif de transfert étanche entre deux volumes clos, ce dispositif comprenant une première et une deuxième brides (18, 20) aptes à être solidarisées l'une de l'autre par une première liaison à baïonnette (32), et une première et une deuxième portes (22, 24) obturant normalement des ouvertures délimitées respectivement par la première et la deuxième brides et aptes à être solidarisées l'une de l'autre par une deuxième liaison à baïonnette (34), ce mécanisme de commande comprenant :
- un organe de commande mobile (36), monté sur la première bride (18) de façon à pouvoir se déplacer entre une position de fermeture et une position d'ouverture, en passant par une position intermédiaire de verrouillage,
- un système de rampes (44) interposé entre l'organe de commande (36) et la première porte (22), de façon à décoller cette dernière de la première bride lors d'un déplacement de l'organe de commande de sa position de fermeture vers sa position d'ouverture,
- un premier verrou (48) bloquant normalement l'organe de commande (36) dans sa position de fermeture, et automatiquement déverrouillé par la présence de la deuxième porte (24) contre la première porte (22),
- un deuxième verrou (62) bloquant normalement l'organe de commande (36) dans sa position de fermeture, et automatiquement déverrouillé par la solidarisation de la deuxième bride (20) sur la première bride (18) par la première liaison à baïonnette (32),
- un troisième verrou (78) normalement déverrouillé lorsque l'organe de commande (36) est dans sa position de fermeture, et bloquant automatiquement la première liaison à baïonnette (32) dans un état de solidarisation des première et deuxième brides (18, 20) lorsque l'organe de commande (36) se trouve entre ses positions de fermeture et d'ouverture ou dans l'une de ces positions,
- un quatrième verrou (102), normalement déverrouillé lorsque l'organe de commande (36) est dans sa position de fermeture, et s'opposant automatiquement au retour de cet organe vers sa position de fermeture, après un décollement de la première porte (22) commandé par le système de rampes (44), lorsque l'organe de commande se trouve entre ses positions de fermeture et d'ouverture ou dans l'une de ces positions,
caractérisé ce en ce que le mécanisme de commande centralisé comporte également un verrou de protection (92) normalement déverrouillé en position de fermeture et en position d'ouverture de l'organe de commande (36) et apte à bloquer l'organe de commande (36) lorsque la deuxième bride (20) n'est pas au moins complètement verrouillée sur la première bride entre le moment où le deuxième verrou (62) est en position déverrouillée et avant le moment où le troisième verrou (78) bloque la première liaison baïonnette dans un état de solidarisation des première (18) et deuxième (20) brides, de sorte à empêcher l'ouverture de la première porte.

2. Mécanisme de commande selon la revendication 1, dans lequel le deuxième verrou (62) comprend une première tige de blocage (64) montée coulissante dans un alésage (66) de l'organe de commande (36) ; un premier moyen élastique (68) tendant à déplacer cette tige de blocage vers la première bride (18), de façon à l'introduire partiellement dans un alésage traversant (72) formé dans cette bride, lorsque l'organe de commande occupe sa position de fermeture ; et une deuxième tige de commande (70) montée coulissante dans cet alésage traversant, de façon à faire saillie sur une face de la première bride tournée vers la deuxième bride, en un emplacement tel que cette tige de commande n'est repoussée, pour autoriser une rotation de l'organe de commande, que lorsque la première liaison à baïonnettes (32) est verrouillée.

3. Mécanisme de commande selon la revendication 2, dans lequel le verrou de protection (92) comprend une troisième tige de blocage (94) montée coulissante dans un alésage (96) de l'organe de commande (36), un troisième moyen élastique (98) tendant à déplacer la troisième tige de blocage (94) vers la première bride (18), la troisième tige de blocage (94) et le troisième alésage (96) étant situés en amont de la première tige de blocage (64) dans le sens d'ouverture de l'organe commande (36), de sorte que la troisième tige de blocage (94) s'introduise partiellement dans l'alésage traversant (72) du deuxième verrou (62), lorsque l'organe de commande (36) occupe une position intermédiaire; et que la deuxième bride (20) n'est pas complètement verrouillée en rotation sur la première bride (18).

4. Mécanisme de commande selon la revendication 3, dans lequel la troisième tige de blocage (94) comporte une extrémité longitudinale (94.1) orientée vers la première bride (18), ladite extrémité longitudinale (94.1) étant munie d'une face inclinée de telle sorte que ladite face provoque l'escamotage de la troisième tige de blocage (94) dans l'organe de commande (36) lors du déplacement de l'organe de commande vers sa position de fermeture.

5. Mécanisme de commande selon l'une des revendications 1 à 4, dans lequel le premier verrou (48) comporte un premier organe de blocage mobile (50) supporté par la première porte (22) du côté opposé à la deuxième porte (24), cet organe de blocage (50) étant destiné à coopérer avec ledit organe de commande (36), et une tige de commande (52) apte à coopérer avec l'organe de blocage (50) lorsque l'organe de blocage (50) occupe sa position de fermeture et lorsque la deuxième porte (24) ne repousse pas la tige de commande (52), pour assurer le blocage de l'organe de commande (36).

6. Mécanisme de commande selon l'une quelconque des revendications 1 à 5, dans lequel le troisième verrou (78) comprend une deuxième tige de blocage (80) montée coulissante dans un deuxième alésage (82) de la première bride (18), au moins une surface de came (88) formée dans l'organe de commande, contre laquelle est appliquée une extrémité de la deuxième tige de blocage, de telle sorte que l'extrémité opposée de la deuxième tige de blocage soit effacée dans le deuxième alésage lorsque l'organe de commande est en position de fermeture, et fasse saillie sur une face de la première bride tournée vers la deuxième bride (20), en un emplacement tel qu'elle bloque la première liaison à baïonnette (32) dans un état verrouillé, lorsque l'organe de commande se trouve entre les positions de fermeture et d'ouverture, ou dans une de ces positions.

7. Mécanisme de commande selon l'une quelconque des revendications 1 à 6, dans lequel le quatrième verrou (102) comprend un doigt de blocage (104) monté coulissant dans un alésage (106) de la première bride, des moyens élastiques (108) tendant à appliquer le doigt de blocage contre une face en regard de l'organe de commande, une rainure de piégeage (112) formée dans cette face en regard, de façon à se trouver en face du doigt de blocage lorsque l'organe de commande se trouve entre les positions de fermeture et d'ouverture ou dans l'une de ces positions, et une surface d'appui (110) liée à la première porte (22), maintenant le doigt de blocage (104) en totalité dans l'alésage (106) de la première bride tant que la première porte n'est pas décollée de la première bride.

8. Mécanisme de commande selon l'une quelconque des revendications 1 à 7, dans lequel le système de rampes comprend deux rampes parallèles (44), en vis-à-vis, liées à la première porte (22), et un galet (46) porté par l'organe de commande (36) et coopérant simultanément avec ces deux rampes parallèles.

9. Mécanisme de commande selon les revendications 7 et 8, dans lequel la surface d'appui (110) ainsi que les rampes parallèles (44) sont formées sur une pièce (42) apte à être fixée sur une face de la première porte (22) opposée à la deuxième porte (24), cette pièce supportant également le premier verrou (48).

10. Mécanisme de commande selon l'une quelconque des revendications 1 à 9, dans lequel l'organe de commande (36) est un organe pivotant, monté sur une face de la première bride (18) opposée à la deuxième bride (20) par un axe de pivotement (38).

11. Mécanisme de commande selon la revendication 10 en combinaison avec la revendication 3, dans lequel la première tige de blocage (64) et la troisième tige de blocage (94) sont situées à la même distance de l'axe de rotation de l'organe de commande.

12. Mécanisme de commande selon l'une quelconque des revendications 1 à 11, dans lequel l'organe de commande (36) est muni d'un levier de commande manuel (40).

13. Volume clos comportant une première bride (18), une première porte et un mécanisme de commande centralisée selon l'une des revendications 1 à 12.

14. Dispositif de transfert entre un premier et un deuxième volume volumes clos, le premier volume clos étant un volume clos selon la revendication 13 et le deuxième volume clos comporte un deuxième bride (20) et une deuxième porte, la première bride (18) et la deuxième bride (20) étant aptes à être solidarisées l'une à l'autre par une première liaison à baïonnette (32) et la première (22) et la deuxième (24) porte étant aptes à être solidarisées l'une à l'autre par une deuxième liaison à baïonnette (34).

## Patentansprüche

1. Zentralisierter Steuermechanismus mit eingebauten Sicherheitseinrichtungen für eine Vorrichtung zum abgedichteten Transfer zwischen zwei abgeschlossenen Volumen, wobei die Vorrichtung einen ersten und einen zweiten Flansch (18, 20) umfasst, welche dazu eingerichtet sind, miteinander durch eine erste Bajonettverbindung (32) verbunden zu werden, sowie einen ersten und einen zweiten Verschluss (22, 24), welche normalerweise Öffnungen verschließen, welche jeweils durch den ersten und den zweiten Flansch begrenzt sind, und dazu eingerichtet sind, miteinander durch eine zweite Bajonettverbindung (34) verbunden zu werden, wobei der Steuermechanismus umfasst:
- ein bewegliches Steuerelement (36), welche an dem ersten Flansch (18) derart angebracht ist, dass sie sich zwischen einer Schließposition und einer Öffnungsposition verlagern kann, wobei eine Zwischen-Schliessposition durchlaufen wird,
- ein System von Rampen (44), welches zwischen dem Steuerelement (36) und dem ersten Verschluss (22) derart eingefügt ist, dass letzterer von dem ersten Flansch während einer Verlagerung dem Steuerelement von ihrer Schliessposition in Richtung ihrer Öffnungsposition gelöst wird,
- eine erste Verriegelung (48), welche normalerweise das Steuerelement (36) in ihrer Schließposition blockiert und bei Anliegen des zweiten Verschlusses (24) gegen den ersten Verschluss (22) automatisch entriegelt wird,
- eine zweite Verriegelung (62), welche normalerweise das Steuerelement (36) in ihrer Schließposition blockiert und bei Verbindung des zweiten Flansches (20) mit dem ersten Flansch (18) durch die erste Bajonettverbindung (32) automatisch entriegelt wird,
- eine dritte Verriegelung (78), welche normalerweise entriegelt ist, wenn das Steuerelement (36) in ihrer Schließposition ist, und welche automatisch die erste Bajonettverbindung (32) in einem Zustand einer Verbindung des ersten und zweiten Flanschs (18, 20) blockiert, wenn sich das Steuerelement (36) zwischen seinen Schliess- und Öffnungspositionen befindet oder in einer dieser Positionen,
- eine vierte Verriegelung (102), welche normalerweise entriegelt ist, wenn das Steuerelement (36) in ihrer Schließposition ist, und sich automatisch der Rückkehr dieser Einrichtung in Richtung ihrer Schließposition entgegensetzt, nach einem Lösen des ersten Verschlusses (22), welches von dem System von Rampen (44) gesteuert wird, wenn das Steuerelement sich zwischen ihren Schliess- und Öffnungspositionen befindet oder in einer dieser Positionen,
**dadurch gekennzeichnet, dass** der zentralisierte Steuermechanismus ferner eine Sicherheitsverriegelung (92) umfasst, welche normalerweise in der Schließposition und der Öffnungsposition dem Steuerelement (36) entriegelt ist und dazu eingerichtet ist, das Steuerelement (36) zu blockieren, wenn der zweite Flansch (20) nicht wenigstens vollständig auf dem ersten Flansch verriegelt ist, zwischen dem Moment, in dem die zweite Verriegelung (62) in entriegelter Position ist, und vor dem Moment, in dem die dritte Verriegelung (78) die erste Bajonettverbindung in einem Zustand einer Verbindung des ersten (18) und zweiten (20) Flanschs blockiert, um so das Öffnen des ersten Verschlusses zu verhindern.

2. Steuermechanismus nach Anspruch 1, wobei die zweite Verriegelung (62) einen ersten Blockierriegel (64) umfasst, welcher verschiebbar in einer Bohrung (66) dem Steuerelement (36) aufgenommen ist; wobei ein erstes elastisches Mittel (68) dazu neigt, den Blockierriegel in Richtung des ersten Flanschs (18) zu verlagern, so dass er teilweise in eine durchgehende Bohrung (72) eingeführt wird, welche in dem Flansch gebildet ist, wenn das Steuerelement ihre Schließposition einnimmt; sowie einen zweiten Steuerriegel (70), welcher verschiebbar in der durchgehenden Bohrung aufgenommen ist, so dass er an einer Fläche des ersten Flanschs hervortritt, welche zu dem zweiten Flansch weist, an einer derartigen Position, dass der Steuerriegel nur verschoben wird, um eine Rotation dem Steuerelement zu erlauben, wenn die erste Bajonettverbindung (32) verriegelt ist.

3. Steuermechanismus nach Anspruch 2, wobei die Sicherheitsverriegelung (92) einen dritten Blockierriegel (94) umfasst, welcher verschiebbar in einer Bohrung (96) dem Steuerelement (36) aufgenommen ist, wobei ein drittes elastisches Element (98) dazu neigt, den dritten Blockierriegel (94) in Richtung des ersten Flanschs (18) zu verlagern, wobei der dritte Blockierriegel (94) und die dritte Bohrung (96) in der Öffnungsrichtung dem Steuerelement (36) vor dem ersten Blockierriegel (64) angeordnet ist, so dass sich der dritte Blockierriegel (94) teilweise in die durchgehende Bohrung (72) der zweiten Verriegelung (62) einführt, wenn das Steuerelement (36) eine Zwischenposition einnimmt; und dass der zweite Flansch (20) nicht vollständig in Rotation an dem ersten Flansch (18) verriegelt ist.

4. Steuermechanismus nach Anspruch 3, wobei der dritte Blockierriegel (94) ein longitudinales Ende (94.1) umfasst, welches in Richtung des ersten Flanschs (18) orientiert ist, wobei das longitudinale Ende (94.1) mit einer geneigten Fläche derart versehen ist, dass die Fläche das Einfahren des dritten Blockierriegels (94) in das Steuerelement (36) hervorruft, wenn das Steuerelement (36) sich in Richtung ihrer Schließposition verlagert.

5. Steuermechanismus nach einem der Ansprüche 1 bis 4, wobei die erste Verriegelung (48) ein erstes bewegliches Blockierelement (50) umfasst, welches von dem ersten Verschluss (22) von der Seite gegenüber dem zweiten Verschluss (24) getragen wird, wobei das Blockierelement (50) dazu vorgesehen ist, mit dem Steuerelement (36) zusammenzuwirken, sowie einen Steuerriegel (52), welcher dazu eingerichtet ist, mit dem Blockierelement (50) zusammenzuwirken, wenn das Blockierelement (50) seine Schließposition einnimmt und wenn der zweite Verschluss (24) nicht den Steuerriegel (52) drückt, um das Blockieren des Steuerelements (36) sicherzustellen.

6. Steuermechanismus nach einem der Ansprüche 1 bis 5, wobei die dritte Verriegelung (78) einen zweiten Blockierriegel (80) umfasst, welcher beweglich in einer zweiten Bohrung (82) des ersten Flanschs (18) aufgenommen ist, wobei wenigstens eine Nockenfläche (88) an dem Steuerelement gebildet ist, gegen welche ein Ende des zweiten Blockierriegels derart angelegt ist, dass das gegenüberliegende Ende des zweiten Blockierriegels in die zweite Bohrung zurücktritt, wenn das Steuerelement in Schließposition ist, und zum Hervortreten an einer Fläche des ersten Flanschs (20), welche zu dem zweiten Flansch (20) gedreht ist, veranlasst wird, an einer derartigen Position, dass es die erste Bajonettverbindung (32) in einem gesperrten Zustand blockiert, wenn das Steuerelement sich zwischen seinen Schliess-Öffnungspositionen befindet oder in einer dieser Positionen.

7. Steuermechanismus nach einem der Ansprüche 1 bis 6, wobei die vierte Verriegelung (102) einen Blockierfinger (104) umfasst, welcher beweglich in einer Bohrung (106) des ersten Flanschs aufgenommen ist, wobei elastische Mittel (108) dazu neigen, den Blockierfinger gegen eine Fläche gegenüber dem Steuerelement anzulegen, wobei in dieser Fläche gegenüber eine Fangnut (112) derart gebildet ist, dass sie sich zu dem weisend Blockierfinger befindet, wenn sich das Steuerelement zwischen den Schliess- und Öffnungspositionen befindet oder in einer dieser Positionen, und wobei eine Stützfläche (110) mit dem ersten Verschluss (22) verbunden ist, wobei der Blockierfinger (104) vollständig in der Bohrung (106) des ersten Flanschs gehalten wird, so dass der erste Verschluss nicht von dem ersten Flansch gelöst wird.

8. Steuermechanismus nach einem der Ansprüche 1 bis 7, wobei das System von Rampen zwei gegenüberliegende parallele Rampen (44) umfasst, welche an dem ersten Verschluss (22) angebracht sind, sowie eine von dem Steuerelement (36) getragene und gleichzeitig mit den beiden parallelen Rampen zusammenwirkende Rolle (46).

9. Steuermechanismus nach den Ansprüchen 7 und 8, wobei die Tragefläche (110) ebenso wie die parallelen Rampen (44) in einem Stück (42) gebildet sind, welches dazu eingerichtet ist, an einer Fläche des ersten Verschlusses (22) gegenüber dem zweiten Verschluss (24) befestigt zu werden, wobei dieses Stück wiederum die erste Verriegelung (48) trägt.

10. Steuermechanismus nach einem der Ansprüche 1 bis 9, wobei das Steuerelement (36) ein Schwenkelement ist, welches an einer Fläche des ersten Flanschs (18) gegenüber dem zweiten Flansch (20) durch eine Schwenkachse (38) montiert ist.

11. Steuermechanismus nach Anspruch 10 in Kombination mit Anspruch 3, wobei der erste Blockierriegel (64) und der dritte Blockierriegel (94) in gleichem Abstand zu der Rotationsachse des Steuerelements angeordnet sind.

12. Steuermechanismus nach einem der Ansprüche 1 bis 11, wobei das Steuerelement (36) mit einem manuellen Steuerhebel (40) ausgestattet ist.

13. Abgeschlossenes Volumen, umfassend einen ersten Flansch (18), einen ersten Verschluss und einen zentralisierten Steuermechanismus nach einem der Ansprüche 1 bis 12.

14. Vorrichtung zum Transferieren zwischen einem ersten und einem zweiten abgeschlossenen Volumen, wobei das erste abgeschlossene Volumen ein abgeschlossenes Volumen nach Anspruch 13 ist und das zweite abgeschlossene Volumen einen zweiten Flansch (20) und einen zweiten Verschluss umfasst, wobei der erste Flansch (18) und der zweite Flansch (20) dazu eingerichtet sind, miteinander durch eine erste Bajonettverbindung (32) verbunden zu werden, und der erste (22) und der zweite (24) Verschluss dazu eingerichtet sind, miteinander durch eine zweite Bajonettverbindung (34) verbunden zu werden.

## Claims

1. A centralised control mechanism, with integrated safeties, for a device for the sealed transfer between two closed spaces, this device comprising a first flange and second flange (18, 20) which can be securely attached to one another by a first bayonet connection (32), and a first door and a second door (22, 24) normally plugging openings respectively delimited by the first flange and the second flange, and which can be securely attached to one another by a second bayonet connection (34), this control mechanism comprising:
- a movable control member (36), installed on the first flange (18) such that it is able move between a closed position and an open position, passing through an intermediate locking position,
- a system of ramps (44) interposed between the control member (36) and the first door (22), in order to separate the latter from the first flange when the control member moves from its closed position to its open position,
- a first lock (48) normally blocking the control member (36) in its closed position, and which is automatically unlocked by the presence of the second door (24) against the first door (22),
- a second lock (62) normally blocking the control member (36) in its closed position, and which is automatically unlocked when the second flange (20) is securely attached to the first flange (18) by the first bayonet connection (32),
- a third lock (78) which is normally unlocked when the control member (36) is in its closed position, and which automatically blocks the first bayonet connection (32) in a condition of secure attachment of the first and second flanges (18, 20) when the control member (36) is between its closed and open positions, or in one of these positions,
- a fourth lock (102), which is normally unlocked when the control member (36) is in its closed position, and which automatically acts to prevent this member returning to its closed position, after a separation of the first door (22) controlled by the system of ramps (44), when the control member is between its closed and open positions, or in one of these positions,
**characterised in that** the centralised control mechanism also comprises a protective lock (92) which is normally unlocked in the closed position and in the open position of the control member (36), and which can block the control member (36) when the second flange (20) is not at least completely locked on the first flange between the time when the second lock (62) is in the unlocked position, and before the time when the third lock (78) blocks the first bayonet connection in a condition of secure attachment of the first (18) and second (20) flanges, so as to prevent the first door from opening.

2. A control mechanism according to claim 1, in which the second lock (62) comprises a first blocking rod (64) installed such that it is able to slide in a hole (66) of the control member (36); a first elastic means (68) which acts so as to move this blocking rod towards the first flange (18), such that it inserts it partially in a through-hole (72) formed in this flange, when the control member is in its closed position; and a second control rod (70) installed such that it is able to slide in this through-hole, in such a way that it protrudes from one face of the first flange facing the second flange, in a position such that this control rod is pushed, allowing the control member to rotate, only when the first bayonet connection (32) is locked.

3. A control mechanism according to claim 2, in which the protective lock (92) comprises a third blocking rod (94) installed such that it is able to slide in a hole (96) of the control member (36), a third elastic means (98) acting so as to move the third blocking rod (94) towards the first flange (18), the third blocking rod (94) and the third hole (96) being positioned upstream of the first blocking rod (64) in the direction of opening of the control member (36), such that the third blocking rod (94) is partially inserted into the through-hole (72) of the second lock (62), when the control member (36) is in an intermediate position; and such that the second flange (20) is not completely locked so as to prevent it from rotating on the first flange (18).

4. A control mechanism according to claim 3, in which the third blocking rod (94) comprises a longitudinal end (94.1) pointing towards the first flange (18), said longitudinal end (94.1) having a face which is inclined such that said face causes the third blocking rod (94) to be retracted into the control member (36) when the control member moves towards its closed position.

5. A control mechanism according to one of claims 1 to 4, in which the first lock (48) comprises a first moving blocking member (50) supported by the first door (22) on the side opposite the second door (24), this blocking member (50) being configured to cooperate with said control member (36), and a control rod (52) able to cooperate with the blocking member (50) when the blocking member (50) is in its closed position, and when the second door (24) does not push away the control rod (52), in order to block the control member (36).

6. A control mechanism according to any one of claims 1 to 5, in which the third lock (78) comprises a second blocking rod (80) installed such that it is able to slide in a second hole (82) of the first flange (18), at least one cam surface (88) being formed in the control member, against which one end of the second blocking rod is pressed, such that the end opposite the second blocking rod is concealed in the second hole when the control member is in a closed position, and protrudes from one face of the first flange facing the second flange (20), in a position such that it blocks the first bayonet connection (32) in a locked state, when the control member is between the closed and open positions, or in one of these positions.

7. A control mechanism according to any one of claims 1 to 6, in which the fourth lock (102) comprises a blocking pin (104) installed such that it is able slide in a hole (106) of the first flange, elastic means (108) acting so as to press the blocking pin against a face opposite the control member, and a trapping groove (112) formed in this face opposite it, such that it is positioned opposite the blocking pin when the control member is between the closed and open positions or in one of these positions, and a support surface (110) being connected to the first door (22), completely holding the blocking pin (104) in the hole (106) of the first flange until the first door is separated from the first flange.

8. A control mechanism according to any one of claims 1 to 7, in which the system of ramps comprises two parallel ramps (44), facing one another, connected to the first door (22), and a roller (46) supported by the control member (36) and cooperating simultaneously with these two parallel ramps.

9. A control mechanism according to claims 7 and 8, in which the support surface (110) and the parallel ramps (44) are formed on a part (42) which can be attached to one face of the first door (22) opposite the second door (24),this part also supporting the first lock (48).

10. A control mechanism according to any one of claims 1 to 9, in which the control member (36) is a pivoting member, installed on one face of the first flange (18) opposite the second flange (20) by a swivel pin (38).

11. A control mechanism according to claim 10 in combination with claim 3, in which the first blocking rod (64) and the third blocking rod (94) are positioned at the same distance from the axis of rotation of the control member.

12. A control mechanism according to any one of claims 1 to 11, in which the control member (36) is fitted with a manual control lever (40).

13. A closed space comprising a first flange (18), a first door and a centralised control mechanism according to any one of claims 1 to 12.

14. A device for transfer between a first closed space and a second closed space, the first closed space being a closed space according to claim 13 and the second closed space comprises a second flange (20) and a second door, the first flange (18) and the second flange (20) being configured to be securely attached to one another by a first bayonet connection (32), and the first door (22) and the second door (24) being configured to be securely attached to one another by a second bayonet connection (34).
